# FASCICULE DE BREVET EUROPEEN

(11) **EP 0 973 079 B1**
(45) Date de publication et mention de la délivrance du brevet: **26.05.2004**
(21) Numéro de dépôt: 99401741.6
(22) Date de dépôt: 09.07.1999
(51) Int. Cl.: G05B 19/042

(54) **Installation de pilotage d'au moins un module de siège**
Anlage zur Steuerung mindestens eines Sitzmoduls
Control device for at least one seat module

(30) Priorité: 16.07.1998 FR 9809113
(43) Date de publication de la demande: 19.01.2000
(73) Titulaire: LABINAL, 78180 Montigny le Bretonneux (FR)
(72) Inventeur: Tual, Frédéric, 44600 Saint-Nazaire (FR); Renault, Guy, 93800 Epinay/Seine (FR); Marin-Martinod, Thierry, 95690 Nesles la Vallee (FR)
(74) Mandataire: Blot, Philippe Robert Emile

(56) Documents cités:
- EP-A- 0 761 494
- WO-A-97/42050
- DE-A- 19 506 764
- FR-A- 2 748 240
- US-A- 5 019 759
- US-A- 5 097 185
- PATENT ABSTRACTS OF JAPAN vol. 017, no. 472 (M-1470), 27 août 1993 (1993-08-27) & JP 05 112165 A (TOYOTA MOTOR CORP), 7 mai 1993 (1993-05-07)

## Description

La présente invention concerne une installation de pilotage de plusieurs modules de sièges selon le préambules de la revendication 1.

Le terme module de siège désigne un siège unique ou un ensemble de sièges accolés aptes à recevoir deux, trois ou quatre personnes.

Une telle installation de pilotage est décrite par exemple dans le document WO-97/42050 où elle est appliquée à des sièges d'avion.

Dans ce document, chaque module de siège est associé à une unité de commande propre. Celle-ci comporte des moyens d'entrée ou de saisie d'ordres de commande, tels qu'un clavier. La saisie d'un ordre de commande provoque le déplacement de l'un des éléments de siège.

Dans l'installation décrite dans le document précité, les différentes unités de commande d'un même avion sont reliées entre elles par un bus externe, afin de permettre la commande de plusieurs sièges depuis les mêmes moyens d'entrée d'ordres de commande.

Les moyens d'entrée d'ordres de commande comportent en outre un lecteur de carte à mémoire. La carte décrite renferme des informations de paramétrisation correspondantes par exemple aux positions extrêmes de chaque actionneur.

Les unités de commande sont configuréés à partir des informations de paramétrisation stockées dans la carte à mémoire, ces dernières étant mémorisées dans les unités de commande.

Ainsi, avec une telle installation, il est possible de définir, sans intervention manuelle directe sur les actionneurs, les positions extrêmes de ceux-ci et ainsi la course de déplacement admissible des actionneurs.

Dans un mode de réalisation particulier de l'installation, les actionneurs sont munis chacun d'un capteur de relevés d'une variable représentative de son état de fonctionnement et donc du fonctionnement du module de siège associé. Ces capteurs sont formés par exemple par des potentiomètres dont les deux parties mobiles sont assujetties à deux parties mobiles associées de chaque actionneur.

Les variables mesurées par chaque capteur sont utilisées par l'unité de commande propre au module de siège, afin d'assurer une commande en boucle de l'actionneur associé au capteur.

L'installation décrite dans le document précité permet de s'affranchir de toute intervention mécanique sur le module de siège afin de définir, pour chaque actionneur, des plages de fonctionnement prédéterminées. Ces plages sont en effet définies dans l'unité de commande par mémorisation des positions extrêmes de chaque actionneur.

Pourtant, les tolérances de fabrication des sièges, et notamment les tolérances de fabrication des actionneurs intégrés dans ceux-ci, sont à l'origine de décalages sensibles dans les positions réelles des éléments de sièges, même si les ordres de commande appliqués aux actionneurs correspondants sont identiques et auraient du conduire les éléments de siège dans des positions semblables.

Ainsi, il en résulte des difficultés pour configurer convenablement chacun des sièges.

En particulier, l'alignement des dossiers des sièges adjacents est délicat, puisqu'une position alignée des dossiers de sièges correspond souvent à des positions distinctes des actionneurs associés aux dossiers.

L'invention a pour but une installation de pilotage permettant de configurer et de commander simplement les modules de siège d'un avion, et permettant notamment de compenser les tolérances de fabrication des modules de siège et des actionneurs qu'ils comportent.

A cet effet, l'invention a pour objet une installation de pilotage selon la revendication 1.

Suivant des modes particuliers de réalisation, l'installation de pilotage comporte l'une ou plusieurs des caractéristiques des revendications dépendantes.

L'invention sera mieux comprise à la lecture de la description qui va suivre, donnée uniquement à titre d'exemple et faite en se référant aux dessins sur lesquels :
- La figure 1 est une vue de dessus de l'aménagement intérieur d'un avion ; et
- La figure 2 est une vue schématique de l'installation de pilotage selon l'invention sur lequel seuls deux sièges sont représentés.

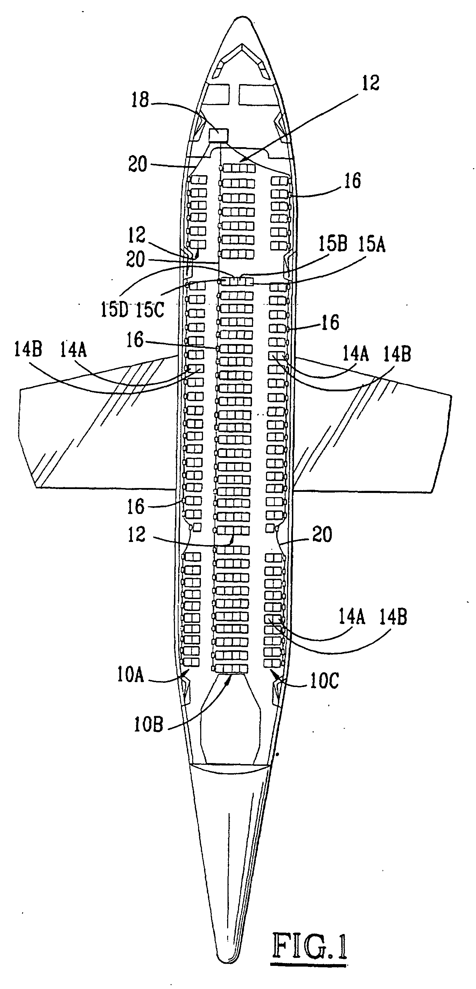

L'aménagement intérieur de l'avion représenté sur la figure 1 comporte trois rangées 10A, 10B, 10C de modules de sièges 12 alignés les uns derrières les autres. Chaque module de siège latéral comporte deux sièges motorisés adjacents 14A,14B. Les modules de sièges de la rangée centrale 10B comportent quatre sièges adjacents 15A, 15B, 15C, 15D.

Les sièges d'un même module sont portés par un châssis commun par l'intermédiaire duquel ils sont fixés au plancher de l'avion. Des actionneurs électriques équipent chaque siège pour assurer le déplacement motorisé des différents éléments mobiles du siège.

Comme représenté sur la figure 1, chaque module de siège 12 est associé à une unité de commande 16. Cette unité de commande est adaptée pour commander les actionneurs du module de siège associé.

Les unités de commande 16 de tous les modules de siège de l'avion. sont reliées à une unité centrale de gestion 18, par l'intermédiaire d'un bus externe 20.

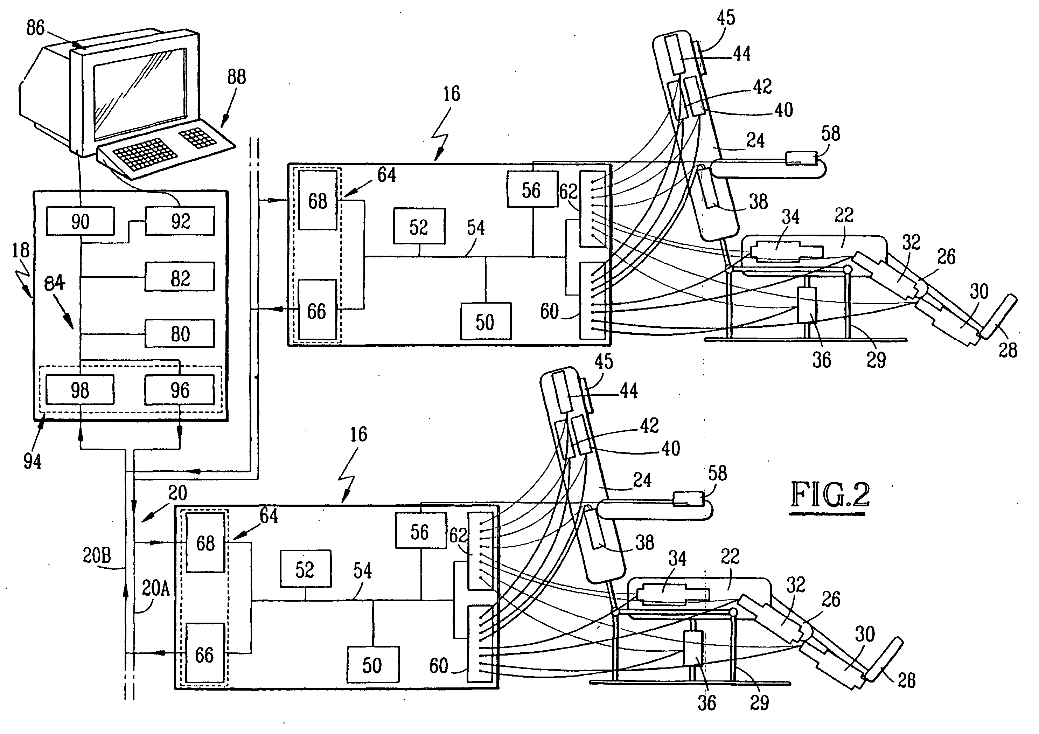

Sur la figure 2 sont représentés deux sièges de deux modules de siège distincts, par exemple deux modules de siège adjacents des deux rangées 10A et 10B.

Chaque siège comporte une assise 22, un dossier 24, un repose-jambes 26 et un repose-pieds 28. Ces différents éléments sont déplaçables les uns par rapport aux autres et sont en outre montés mobiles par rapport à un châssis 29 du module de siège.

Pour le déplacement des différents éléments mobiles, chaque siège comporte un actionneur 30 de déplacement du repose-pieds, un actionneur 32 de déplacement du repose-jambes, et un actionneur 34 d'inclinaison du dossier. Il comporte en outre un actionneur 36 de basculement de l'assise. Un actionneur 38 de déplacement de l'appui lombaire est intégré dans le dossier 24. De plus, dans la partie supérieure du dossier 24, trois actionneurs 40, 42, 44 sont installés afin d'assurer le mouvement d'un appui-tête 45. Ces actionneurs sont adaptés respectivement pour le réglage de la hauteur de l'appui-tête, son basculement et le rabat de volets latéraux de l'appui-tête pour le maintien de la tête.

Chaque actionneur est équipé d'un capteur de position adapté pour fournir une valeur représentative de la position instantanée de la partie mobile de l'actionneur par rapport à sa partie fixe. Ce capteur est par exemple un potentiomètre rotatif ou rectiligne suivant le type d'actionneur auquel il est associé.

Sur la figure 2, chaque siège est associé à une unité de commande 16. En pratique, chaque unité de commande 16 est associée à un module de siège comportant deux ou quatre sièges et non à un unique siège, comme représenté.

Les unités de commande 16 sont connectés à une ligne d'alimentation électrique de puissance non représentée.

Chaque unité de commande 16 comporte un module de traitement d'informations 50 tel qu'un micro contrôleur et des moyens de mémorisation 52, destinés au stockage de programmes de commande du module de siège, ainsi que de données ou variables nécessaires au fonctionnement de celui-ci.

Les différents organes de l'unité de commande 16 sont reliés les uns aux autres par un bus interne 54 Sur ce bus est prévu, pour chaque siège du module de siège, une interface 56 de connexion d'un clavier de commande 58 installé sur l'accoudoir du siège.

Le clavier de commande 58 de chaque siège comporte, pour chaque actionneur du siège, deux boutons de commande permettant le déplacement de l'actionneur associé dans deux sens opposés.

L'unité de commande 16 comporte en outre une interface de commande de puissance 60 à laquelle est relié, séparément, chaque actionneur du module de siège associé. Sur la figure 2, les câbles de liaison des actionneurs à l'interface 60 sont représentés schématiquement. En pratique, ceux-ci sont dissimulés dans le garnissage du module de siège.

L'interface de commande de puissance 60 est adaptée pour fournir l'énergie électrique nécessaire au fonctionnement de chaque actionneur pour son déplacement dans l'un ou l'autre des sens. Elle comporte donc une sortie pour chaque actionneur. L'alimentation de l'un ou l'autre des actionneurs et son déplacement sont pilotés par l'interface de commande de puissance sous la commande du micro contrôleur 50 en fonction notamment des ordres de commande saisis depuis le clavier 58.

Par ailleurs, l'unité de commande 16 comporte une interface de recueil d'informations 62. Cette interface comporte une entrée de recueil d'informations pour chaque actionneur. Cette entrée est reliée aux capteurs de position potentiométrique associés aux actionneurs.

L'interface de recueil d'informations 62 est adaptée pour recueillir l'information du capteur associé à chaque actionneur lors d'une demande d'informations émanant du micro contrôleur 50. Elle comporte notamment un convertisseur analogique/numérique adapté pour rendre exploitable par le micro contrôleur 50 le signal analogique fourni par chaque capteur. Ainsi, l'interface de recueil d'informations fournit au micro contrôleur 50 une variable représentative de la position de l'actionneur associé.

En outre, des moyens 64 de transmission bidirectionnelle d'informations entre l'unité de commande 16 et l'unité centrale de gestion 18 sont intégrés dans l'unité de commande 16.

Ces moyens de transmission d'informations 64 comportent d'une part des moyens 66 d'émission d'informations vers l'unité centrale de gestion 18, et d'autre part des moyens 68 de réception d'informations émises par l'unité centrale de gestion 18.

Les moyens 64 sont reliés au bus externe 20. Ce dernier est de tout type adapté et satisfait par exemple à la norme RS 485. Pour des raisons de clarté, le bus 20 est représenté sur les dessins comme comportant deux supports filiformes 20A, 20B, chacun destiné au transfert d'informations suivant un sens entre les unités 16 et 18. En pratique, ces informations sont véhiculées sur le même support.

L'unité centrale de gestion 18 comporte un module de traitement d'informations 80 tel qu'un micro contrôleur et une mémoire 82. Les différents organes de l'unité centrale de gestion sont connectés les uns aux autres par un bus interne 84 de transfert de données. Un écran 86 de visualisation d'informations et un clavier 88 de saisie d'informations sont reliés au bus 84 par l'intermédiaire d'interfaces adaptées notées 90 et 92.

En outre, des moyens 94 de transmission bidirectionnelle d'informations sont intégrés à l'unité centrale de gestion 18 et reliés au bus interne 84. Ces moyens de transmission 94 sont reliés au bus externe 20 pour la transmission bidirectionnelle d'informations entre l'unité de commande 16 et l'unité centrale de gestion 18.

A cet effet, les moyens de transmission bidirectionnelle 94 comportent des moyens d'émission d'informations 96 et des moyens de réception d'informations 98.

Un programme de commande est stocké dans la mémoire 52 de chaque unité de commande 16. Il est adapté pour gérer le fonctionnement de celle-ci. Il est apte notamment à commander chaque actionneur en fonction d'ordres de commande saisis par l'utilisateur depuis le clavier 58.

Ainsi, lors de la réception d'un ordre de commande, le micro contrôleur 50 commande l'interface de commande de puissance 60, afin que celle-ci alimente un actionneur tant que la touche correspondante du clavier 58 est maintenue enfoncée.

Pendant le fonctionnement de l'actionneur, le micro contrôleur 50 vérifie le déplacement satisfaisant de l'actionneur par l'intermédiaire du capteur associé. Le résultat de la mesure est recueilli par l'interface 62 et communiqué au micro contrôleur 50. Ainsi, lors du déplacement d'un élément de siège sous l'action d'un actionneur, ce dernier est commandé en boucle par l'unité 16.

Par ailleurs, la plage de déplacement maximale admissible de chaque actionneur est stockée dans la mémoire 52. A cet effet, des valeurs de seuils correspondant aux positions extrêmes admissibles de l'actionneur sont mémorisées dans l'unité de commande 16.

Lors du déplacement d'un actionneur, le micro contrôleur 50 vérifie périodiquement que la valeur relevée par le capteur associé à l'actionneur est comprise dans la plage de déplacement admissible. Si la valeur relevée par le capteur atteint l'un des seuils, l'alimentation de l'action-neur depuis l'interface de commande de puissance 60 est interrompue.

L'unité 16 comporte des moyens intégrés dans l'interface de commande de puissance 60 adaptés pour évaluer l'intensité instantanée I appliquée à chaque actionneur, ainsi que sa dérivée par rapport au temps dl/dt. Les valeurs de l'intensité 1 et de sa dérivée dl/dt sont comparées en continu à des valeurs maximales prédéterminées.

Si ces valeurs maximales sont dépassées, ce qui est représentatif d'un blocage de l'élément mobile commandé par l'actionneur ou d'un dysfonctionnement de celui-ci, l'exécution de l'ordre de commande en cours est abandonnée et l'actionneur est commandé en sens inverse jusqu'à ce que l'une des deux conditions suivantes soit satisfaite, à savoir le recul de l'actionneur d'une valeur prédéterminée ou l'achèvement d'une période de temps prédéterminée.

La mise en oeuvre des deux conditions alternatives assure que l'une ou l'autre des conditions soit satisfaite, évitant ainsi un recul ininterrompu de l'actionneur. Il est en effet possible que la seule condition portant sur l'étendue du recul ne soit jamais satisfaite, notamment si le capteur de position est défectueux ou si l'actionneur est dans une position extrême.

Le programme stocké dans la mémoire 82, destiné à la gestion du fonctionnement de l'unité centrale 18, est adapté pour l'envoi d'informations vers l'unité de commande 16 et le recueil d'informations depuis cette unité de commande 16.

En particulier, l'unité centrale de gestion 18 permet de saisir depuis le clavier 88 la plage de déplacement admissible de chaque actionneur. Les seuils ainsi définis sont transmis, par l'intermédiaire des moyens d'émission 96, vers l'unité de commande 16 du module de siège associé. Les seuils sont alors stockés dans la mémoire 52 en vue d'être utilisés lors de la commande du siège associé.

De plus, l'unité centrale de gestion est adaptée pour élaborer des ordres de commande de tout ou partie des actionneurs et pour envoyer ces ordres de commande aux unités de commande, lesquelles pilotent en conséquence les actionneurs.

En outre, l'unité centrale de gestion 18 est adaptée pour adresser à l'unité de commande 16 des requêtes correspondant à des demandes d'informations concernant la valeur mesurée par l'un ou l'autre des capteurs associés aux actionneurs.

Lors de la réception d'une telle requête, l'unité de commande 16 retourne, par l'intermédiaire des moyens d'émission 66, la valeur mesurée par le capteur correspondant.

Cette valeur, qui est transmise par le bus 20 aux moyens de réception 98, est alors traitée par le microprocesseur 80. En particulier, cette valeur est affichée sur l'écran 86, permettant sa mise à la disposition d'un technicien ou d'une hôtesse.

Ainsi, il est possible à tout moment de connaître la valeur représentative de la position de l'un quelconque des actionneurs depuis l'unité centrale de gestion 18.

Lors de la configuration des modules de siège, et notamment lors de la mémorisation des plages de déplacement admissibles des actionneurs, le technicien relève, pour deux sièges adjacents alignés, la valeur donnée par chaque capteur des deux sièges. Du fait des tolérances de fabrication des sièges, ces valeurs sont généralement voisines mais non identiques, bien que les deux sièges soient dans des positins identiques.

Afin que les positions limites des deux sièges adjacents soient identiques, l'opérateur impose un décalage aux valeurs de seuil définissant les plages de déplacement admissibles associées aux actionneurs de chaque siège.

Ainsi les éléments mobiles des deux sièges ont des déplacements réels identiques, malgré des valeurs relevées par les capteurs différentes.

Par ailleurs, afin de déterminer les plages de déplacement admissibles, l'opérateur effectue, depuis l'unité centrale de gestion 18, des relevés de valeurs représentatives de la position de chaque actionneur pour différentes positions du siège.

A cet effet, il déplace les différents éléments de siège par commande de celui-ci depuis le clavier 58. Il détermine alors pour certaines positions particulières du siège les valeurs représentatives de la position de chaque actionneur par lecture directe sur l'écran 86.

Les valeurs ainsi relevées sont exploitées pour la configuration des autres sièges de l'avion, en tenant compte des décalages dus aux tolérances de fabrication des sièges.

Les compensations nécessaires, du fait des tolérances de fabrication, peuvent être calculées automatiquement par un programme d'ajustement mis en oeuvre dans l'unité centrale de gestion 18.

Par ailleurs, l'unité de commande 16 comporte un programme adapté pour stocker dans la mémoire 52 un historique de fonctionnement de chacun des actionneurs du modules de sièges associé. En particulier, ce programme est adapté pour déterminer la durée de fonctionnement cumulée de chaque actionneur, ainsi que le courant total consommé par celui-ci.

Ces informations sont communiquées à l'unité centrale de gestion 18 sur requête de celle-ci. Ces informations sont alors exploitées par l'unité centrale de gestion 18, notamment afin d'assurer une maintenance préventive des modules de siège.

L'unité centrale de gestion 18 peut être montée à demeure dans l'avion par exemple dans le poste de pilotage ou encore être amovible, celle-ci n'étant connectée aux modules de siège que lors de phases de configuration ou de maintenance de ceux-ci.

De plus, le réseau externe 20 peut être supprimé. L'unité centrale de gestion 18 est alors connectée successivement à l'unité de commande 16 de chaque module de siège à l'aide d'un connecteur adapté.

Suivant un premier mode de réalisation, l'unité centrale de gestion 18 comporte un micro-ordinateur de type PC dans lequel est chargé un programme approprié permettant la communication bidirectionelle avec les modules de commande 16.

En variante, l'unité centrale de gestion 18 est un ordinateur de poche ou un module portable développé spécifiquement pour cette application.

Dans l'exemple décrit, les capteurs sont portés par les actionneurs eux-mêmes. Toutefois, en variante, les capteurs sont disposés directement entre deux éléments mobiles du module de siège.

## Revendications

1. Installation de pilotage de plusieurs modules de siège (12) muni chacun d'un ensemble d'actionneurs (30, 32, 34, 36, 38, 40, 42, 44) destinés chacun au réglage d'un élément (22, 24, 26, 28) du module de siège, du type comportant:
- une unité de commande (16), propre à chaque module de siège (12), pour la commande des actionneurs du module de siège associé depuis des moyens (58) d'entrée d'ordres de commande, laquelle unité de commande (16) comporte des moyens (62) de recueil de variables représentatives de l'état de fonctionnement du module de siège, mesurées par des capteurs montés sur ledit module de siège ; et
- une même unité centrale (18) de gestion des modules de siège (12) connectée à chaque unité de commande (16), laquelle unité centrale de gestion (18) comporte des moyens (96) d'émission d'informations vers chaque unité de commande (16),
**caractérisée en ce que** chaque unité de commande (16) comporte des moyens (66) d'émission d'au moins certaines des variables représentatives de l'état de fonctionnement du module de siège associé, vers l'unité centrale de gestion (18), et **en ce que** ladite unité centrale de gestion (18) comporte des moyens (80, 86) d'exploitation desdites variables transmises.

2. Installation selon la revendication 1, **caractérisée en ce que** l'unité centrale de gestion (18) comporte des moyens (80) d'élaboration d'une requête pour la demande de variables représentatives de l'état de fonctionnement d'au moins l'un des modules de siège, les moyens (96) d'émission d'informations étant adaptés pour l'envoi de cette requête vers la ou chaque unité de commande (16) associée, et **en ce que** les moyens d'émission (66) de la ou chaque unité de commande (16) sont adaptés pour l'envoi vers l'unité centrale de gestion (18) des variables représentatives demandées.

3. Installation selon la revendication 1 ou 2, **caractérisée en ce que** l'unité centrale de gestion (18) comporte des moyens d'entrée d'ordres de commande pour la commande des actionneurs d'au moins un module de siège (12) et les moyens (96) d'émission d'informations sont adaptés pour l'envoi des ordres de commande vers l'unité de commande (16) associée au ou à chaque module de siège (12) à commander, la ou chaque unité de commande (16) exécutant les ordres de commande reçus de l'unité centrale de gestion (18).

4. Installation selon l'une quelconque des revendications précédentes, **caractérisée en ce que** l'unité centrale de gestion (18) comporte des moyens d'affichage (86) desdites variables représentatives reçues de la ou chaque unité de commande (16).

5. Installation selon l'une quelconque des revendications précédentes, **caractérisée en ce que** l'unité centrale de gestion (18) est amovible.

6. Installation selon l'une quelconque des revendications précédentes, **caractérisée en ce qu'**elle comporte un bus externe (20) auquel sont reliées l'unité centrale de gestion (18) et la ou chaque unité de commande (16).

7. installation selon l'une quelconque des revendications précédentes, **caractérisée en ce que** la ou chaque unité de commande (16) comporte des moyens de traitement (50) et de stockage (52) de variables représentatives de l'état de fonctionnement du module de siège associé, et les moyens d'émission (66) de la ou chaque unité de commandé (16) sont adaptés pour l'envoi des variables représentatives traitées et stockées vers l'unité centrale de gestion (18).

8. Installation selon l'une quelconque des revendications précédentes, **caractérisée en ce que** la ou chaque unité de commande (16) comporte d'une part des moyens d'évaluation de l'intensité fournie à chaque actionneur, et d'autre part des moyens de commande du ou de chaque actionneur en sens inverse, lorsque l'intensité fournie à l'actionneur sort d'une plage prédéfinie, et **en ce que** la ou chaque unité de commande (16) comporte des moyens d'interruption de la commande en sens inverse de l'actionneur après un déplacement en sens inverse de l'actionneur supérieur à un déplacément prédéfini ou après l'achèvement d'une période de temps prédéfinie, la première des conditions satisfaite mettant un terme à la commande en sens inverse de l'actionneur.

## Patentansprüche

1. Anlage zur Steuerung von mehreren Sitzmodulen (12), die jeweils mit einer Anzahl von Stellgliedern (30, 32, 34, 36, 38, 40, 42, 44) versehen sind, die jeweils für die Verstellung eines Elements (22, 24, 26, 28) des Sitzmoduls bestimmt sind, umfassend:
- eine jeweils einem Sitzmodul (12) zugeordnete Steuereinheit (16) für die Steuerung der Stellglieder des zugeordneten Sitzmoduls von Mitteln (58) zur Eingabe von Steuerbefehlen aus, wobei die Steuereinheit (16) Mittel (62) zur Aufnahme von für den Betriebszustand des Sitzmoduls repräsentativen Variablen aufweist, die von auf dem Sitzmodul angeordneten Fühlern gemessen werden, und
- eine gemeinsame zentrale Einheit (18) zur Verwaltung der Sitzmodule (12), die an jede Steuereinheit (16) angeschlossen ist und Mittel (96) zur Abgabe von Informationen zu jeder Steuereinheit (16) aufweist,
**dadurch gekennzeichnet, daß** jede Steuereinheit (16) Mittel (66) zur Abgabe von mindestens manchen der für den Betriebszustand des zugeordneten Sitzmoduls repräsentativen Variablen an die zentrale Verwaltungseinheit (18) aufweist und daß die zentrale Verwaltungseinheit (18) Mittel (80, 86) zur Verarbeitung der übertragenen Variablen aufweist.

2. Anlage nach Anspruch 1, **dadurch gekennzeichnet, daß** die zentrale Verwaltungseinheit (18) Mittel (80) zur Erzeugung einer Anfrage für die Anforderung von für den Betriebszustand mindestens eines der Sitzmodule repräsentativen Variablen aufweist, wobei die Mittel (96) zur Abgabe von Informationen für die Übertragung dieser Anfrage zu der oder zu jeder zugeordneten Steuereinheit (16) ausgelegt sind, und daß die Abgabemittel (66)der oder jeder Steuereinheit (16) für die Übertragung der angeforderten repräsentativen Variablen zur zentralen Verwaltungseinheit (18) ausgelegt sind.

3. Anlage nach Anspruch 1 oder 2, **dadurch gekennzeichnet, daß** die zentrale Verwaltungseinheit (18) Mittel zur Eingabe von Steuerbefehlen für die Steuerung der Stellglieder mindestens eines Sitzmoduls (12) aufweist und die Mittel (96) zur Abgabe von Informationen für die Übertragung der Steuerbefehle zu der Steuereinheit (16), die dem oder jedem zu steuernden Sitzmodul (12) zugeordnet ist, ausgelegt sind, wobei die oder jede Steuereinheit (16) die von der zentralen Verwaltungseinheit (18) erhaltenen Steuerbefehle ausführt.

4. Anlage nach einem der vorhergehenden Ansprüche, **dadurch gekennzeichnet, daß** die zentrale Verwaltungseinheit (18) Mittel (86) zum Anzeigen der von der oder jeder Steuereinheit (16) erhaltenen repräsentativen Variablen aufweist.

5. Anlage nach einem der vorhergehenden Ansprüche, **dadurch gekennzeichnet, daß** die zentrale Verwaltungseinheit (18) abnehmbar ist.

6. Anlage nach einem der vorhergehenden Ansprüche, **dadurch gekennzeichnet, daß** sie einen externen Bus (20) aufweist, mit dem die zentrale Verwaltungseinheit (18) und die oder jede Steuereinheit (16) verbunden sind.

7. Anlage nach einem der vorhergehenden Ansprüche, **dadurch gekennzeichnet, daß** die oder jede Steuereinheit (16) Mittel zur Verarbeitung (50) und zur Speicherung (52) von für den Betriebszustand des zugeordneten Sitzmoduls repräsentativen Variablen aufweist, und die Abgabemittel (66) der oder jeder Steuereinheit (16) für die Übertragung der verarbeiteten und gespeicherten repräsentativen Variablen zur zentralen Verwaltungseinheit (18) ausgelegt sind.

8. Anlage nach einem der vorhergehenden Ansprüche, **dadurch gekennzeichnet, daß** die oder jede Steuereinheit (16) einerseits Mittel zum Messen der jedem Stellglied gelieferten Intensität und andererseits Mittel zur Steuerung des oder jedes Stellglieds in umgekehrter Richtung aufweist, wenn die dem Stellglied gelieferte Intensität einen vordefinierten Bereich verläßt, und daß die oder jede Steuereinheit (16) Mittel zur Unterbrechung der Steuerung des Stellglieds in umgekehrter Richtung nach einer Bewegung des Stellglieds in umgekehrter Richtung, die größer als eine vordefinierte Bewegung ist, oder nach Ablauf eines vordefinierten Zeitraums aufweist, wobei die Erfüllung der ersten der Bedingungen die Steuerung des Stellglieds in umgekehrter Richtung beendet.

## Claims

1. Device for controlling several seat modules (12) each furnished with a set of actuators (30, 32, 34, 36, 38, 40, 42, 44) each intended for the adjustment of an element (22, 24, 26, 28) of the seat module, of the type comprising:
- a control unit (16), specific to each seat module (12), for controlling the actuators of the associated seat module from means (58) for inputting control commands, which control unit (16) comprises means (62) for gathering variables representative of the state of operation of the seat module, which variables are measured by sensors mounted on the said seat module; and
- one and the same central management unit (18) for managing the seat module (12) which is connected to each control unit (16), which central management unit (18) comprises means (96) for sending information to each control unit (16),
**characterized in that** each control unit (16) comprises means (66) for sending at least certain of the variables representative of the state of operation of the associated seat module to the central management unit (18), and **in that** the said central management unit (18) comprises means (80, 86) for utilizing the said variables transmitted.

2. Device according to Claim 1, **characterized in that** the central management unit (18) comprises means (80) for formulating a request asking for variables representative of the state of operation of at least one of the seat modules, the information sending means (96) being adapted for dispatching this request to the or each associated control unit (16), and **in that** the sending means (66) of the or each control unit (16) are adapted for dispatching requested representative variables to the central management unit (18).

3. Device according to Claim 1 or 2, **characterized in that** the central management unit (18) comprises means for inputting control commands for the control of the actuators of at least one seat module (12) and the information sending means (96) are adapted for dispatching control commands to the control unit (16) associated with the or with each seat module (12) to be controlled, the or each control unit (16) executing the control commands received from the central management unit (18).

4. Device according to any one of the preceding claims, **characterized in that** the central management unit (18) comprises means (86) of display of the said representative variables received from the or each control unit (16).

5. Device according to any one of the preceding claims, **characterized in that** the central management unit (18) is removable.

6. Device according to any one of the preceding claims, **characterized in that** it comprises an external bus (20) to which the central management unit (18) and the or each control unit (16) are linked.

7. Device according to any one of the preceding claims, **characterized in that** the or each control unit (16) comprises means for processing (50) and for storing (52) variables representative of the state of operation of the associated seat module, and the sending means (66) of the or each control unit (16) are adapted for dispatching processed and stored representative variables to the central management unit (18).

8. Device according to any one of the preceding claims, **characterized in that** the or each control unit (16) comprises on the one hand means for evaluating the intensity provided to each actuator, and on the other hand means of controlling the or each actuator in reverse, when the intensity provided to the actuator departs from a predefined range, and **in that** the or each control unit (16) comprises means for interrupting the reverse control of the actuator after a reverse displacement of the actuator greater than a predefined displacement or after the completion of a predefined time period, the first of the conditions satisfied putting an end to the reverse control of the actuator.
